Europäisches Patentamt

**European Patent Office**

Office européen des brevets

(11) Numéro de publication: **0 059 941**
**A2**

(12) # DEMANDE DE BREVET EUROPEEN

(21) Numéro de dépôt: **82101684.7**

(22) Date de dépôt: **04.03.82**

(51) Int. Cl.³: **F 25 B 39/02**
**B 01 D 1/06**

(30) Priorité: **09.03.81 FR 8104602**

(43) Date de publication de la demande:
**15.09.82 Bulletin 82/37**

(84) Etats contractants désignés:
**BE DE FR GB IT NL**

(71) Demandeur: **STEIN INDUSTRIE Société anonyme dite:**
**19-21, Avenue Morane Saulnier B.P. 74**
**F-78141 Velizy-Villacoublay(FR)**

(72) Inventeur: **Perot, François**
**46, avenue Mozart**
**F-75016 Paris(FR)**

(72) Inventeur: **Pouderoux, Jacqueline**
**12, avenue de Celle**
**F-92360 Meudon la Foret(FR)**

(72) Inventeur: **Diez, Jacques**
**12, Allée Elsa Triolet**
**F-91300 Massy(FR)**

(74) Mandataire: **Weinmiller, Jürgen et al,**
**Zeppelinstrasse 63**
**D-8000 München 80(DE)**

(54) **Procédé de vaporisation d'un liquide pur.**

(57) Procédé de vaporisation d'un liquide pur en échange indirect de chaleur avec un fluide plus chaud, par circulation du liquide par gravité le long d'une surface d'échange (1).

On amène la vapeur formée à s'écouler dans le même sens (6) que le liquide (4), et on règle le débit de liquide en fonction de l'apport de chaleur à travers la surface d'échange de façon qu'au moins la majeure partie du liquide ait déjà été vaporisée lorsque le liquide subsistant parvient dans le bas de la surface d'échange.

Application aux échanges de chaleur mettant en jeu un fluide disponible en faible volume.

## PROCEDE DE VAPORISATION D'UN LIQUIDE PUR

La présente invention concerne un procédé de vaporisation d'un liquide pur en échange indirect de chaleur avec un fluide plus chaud, par circulation dudit liquide par gravité le long d'une surface d'échange, la vapeur formée s'écoulant dans le même sens que le liquide. Des dispositifs de vaporisation à film descendant n'avaient été proposés jusqu'ici que pour la concentration de solutions, et l'on ne vaporisait dans ce cas qu'une faible fraction du liquide initial, afin d'éviter les entartrages ou encrassements de la surface d'échange. L'épaisseur du film liquide y était donc pratiquement constante.

Pour la vaporisation d'un liquide pur, on fait circuler en général le liquide et la vapeur qui se forme au voisinage de la surface d'échange dans le même sens ascendant, le liquide occupant initialement la totalité de la section droite de passage de son côté de la surface d'échange.

Un tel procédé convient très bien lorsque le liquide à vaporiser est disponible en débit et volume élevés, notamment lorsqu'il s'agit d'eau à vaporiser.

Lorsque l'on ne dispose que d'un volume limité du liquide à vaporiser, par exemple lorsque celui-ci constitue un fluide intermédiaire d'échange de chaleur entre deux autres fluides et lorsqu'il est relativement coûteux, on est amené à une immobilisation coûteuse d'un volume de liquide important circulant en circuit fermé.

La présente invention a pour but de remédier à cet inconvénient, et de procurer un procédé de vaporisation d'un liquide pur qui assure une utilisation optimale de la capacité de transfert de chaleur de la surface d'échange, pour un volume de liquide à vaporiser relativement faible, et qui permette notamment d'assurer la vaporisation ou le réchauffage de débits élevés d'un liquide à l'aide d'un fluide de point d'ébullition notablement plus élevé, grâce à une circulation en circuit fermé d'un fluide intermédiaire d'échange de chaleur disponible en volume réduit.

Le procédé selon l'invention est caractérisé en ce que l'on règle le débit de liquide en fonction de l'apport de chaleur à travers la surface d'échange de façon qu'au moins la majeure partie du liquide ait déjà été vaporisée lorsque le liquide subsistant parvient dans le bas de la surface d'échange.

Lorsque la surface d'échange est formée par la surface des tubes d'un faisceau tubulaire, on fait ruisseler le liquide à vaporiser sous une faible épaisseur le long de la surface interne des tubes. On règle avantageusement le débit de liquide à vaporiser de façon qu'environ 90% du liquide aient été vaporisés lorsque le liquide subsistant est parvenu au bas de la surface d'échange.

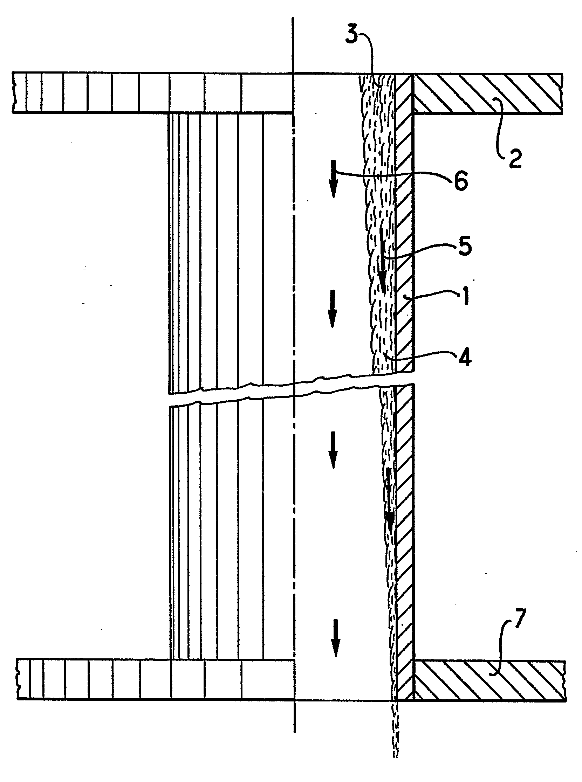

Il est décrit ci-après, à titre d'exemple et en référence à la figure unique du dessin annexé, un tube d'un dispositif de vaporisation de fluide frigorifique monochlorotrifluorométhane en échange de chaleur avec de l'eau, le monochlorotrifluorométhane servant ensuite à assurer par sa condensation le réchauffage et/ou la vaporisation de gaz naturel liquéfié.

Le monochlorotrifluorométhane liquide, disponible à + 5°C sous une pression de 22,8 bars absolus, est vaporisé dans les tubes d'un faisceau tubulaire en échange de chaleur avec de l'eau à 13°C sous la pression atmosphérique.

La figure unique représente de façon très schématique et à échelle agrandie l'un des tubes du faisceau. Ce tube 1 est soudé ou dudgeonné sur une plaque tubulaire 2 sur laquelle arrive le liquide frigorifique 3. Le haut du tube est muni éventuellement d'un dispositif de type connu introduisant le liquide dans le tube et facilitant la formation du film. Le liquide s'écoule en couche mince 4 dans le sens des flèches 5 sur la paroi interne du tube, cependant que la vapeur formée circule dans le même sens dans la zone centrale du tube, comme représenté par les flèches 6. L'épaisseur du film de liquide frigorifique est d'environ 1mm dans le haut du tube, et s'abaisse à environ 0,1mm dans le bas du tube, au niveau de la plaque tubulaire inférieure 7, environ 90% du liquide frigorifique étant alors vaporisés.

On comprendra qu'en pratique le faisceau tubulaire comporte un très grand nombre de tubes verticaux de faible diamètre intérieur, par exemple 25mm, et de grande longueur (plusieurs mètres).

Le procédé de l'invention permet de réduire dans une proportion considérable le volume de fluide frigorifique contenu dans l'ensemble de l'appareil d'échange de chaleur, par rapport à un procédé où la totalité de la section droite des tubes serait occupée par le liquide à vaporiser.

Bien que le procédé décrit en référence à la figure du dessin paraisse la forme de réalisation préférable de l'invention, on comprendra que la surface d'échange peut éventuellement être constituée par des plaques..

0059941

- 4 -

REVENDICATIONS

1/ Procédé de vaporisation d'un liquide pur (3) en échange indirect de chaleur avec un fluide plus chaud, par circulation dudit liquide par gravité le long d'une surface d'échange (1), la vapeur formée s'écoulant dans le même sens (6) que le liquide, caractérisé en ce que l'on règle le débit de liquide en fonction de l'apport de chaleur à travers la surface d'échange de façon qu'au moins la majeure partie du liquide ait déjà été vaporisée lorsque le liquide subsistant parvient dans le bas de la surface d'échange.

2/ Procédé selon la revendication 1, dans lequel la surface d'échange est formée par la surface des tubes d'un faisceau tubulaire vertical, caractérisé en ce que l'on fait ruisseler le liquide à vaporiser sur une faible épaisseur le long de la surface interne des tubes.

3/ Procédé selon l'une des revendications 1 et 2, caractérisé en ce que l'on règle le débit de liquide à vaporiser de façon qu'environ 90% du liquide aient été vaporisés lorsque le liquide résiduel est parvenu au bas de la surface d'échange.